# EUROPÄISCHE PATENTSCHRIFT

(11) **EP 1 163 577 B1**
(45) Veröffentlichungstag und Bekanntmachung des Hinweises auf die Patenterteilung: **26.11.2003**
(21) Anmeldenummer: 00914054.2
(22) Anmeldetag: 02.03.2000
(51) Int. Cl.: G06F 9/38

(54) **CACHEN KURZER PROGRAMMSCHLEIFEN INNERHALB EINES INSTRUKTIONS-FIFOS**
CACHING OF SHORT PROGRAM LOOPS IN AN INSTRUCTION FIFO
MEMOIRES CACHES DE COURTES BOUCLES DE PROGRAMME A L'INTERIEUR D'UN SYSTEME D'INSTRUCTION PREMIER ENTRE PREMIER SORTI

(30) Priorität: 17.03.1999 DE 19911955
(43) Veröffentlichungstag der Anmeldung: 19.12.2001
(73) Patentinhaber: Infineon Technologies AG, 81669 München (DE)
(72) Erfinder: SONNEKALB, Steffen, D-81829 München (DE); BIRKHÄUSER, Jürgen, D-81735 München (DE)
(74) Vertreter: Jannig, Peter, Dipl.-Ing.
(86) Internationale Anmeldenummer: DE0000653
(87) Internationale Veröffentlichungsnummer: WO00055724

(56) Entgegenhaltungen:
- EP-A- 0 511 484
- JP-A- 58 159 154
- US-A- 4 626 988
- US-A- 5 809 326

## Beschreibung

Die vorliegende Erfindung betrifft ein Verfahren zum Auslesen von Befehlen aus einer Speichervorrichtung und Weiterleiten dieser Befehle an die Ausführungseinheit eines Prozessors.

Zur Ausführung eines digitalen Programmes werden von dafür vorgesehenen Einheiten eines Prozessors Befehlscodes aus einem Speicher geladen, wobei dieser Vorgang auch als Befehls-Fetching bezeichnet wird, die Befehlscodes dekodiert und die so erhaltenen Befehle anschließend ausgeführt. Grundlage für das automatische Lesen der Befehlscodes ist ein sog. Befehlszähler, der die Speicheradresse des nächsten auszuführenden Befehles enthält. Ist ein Befehl, der im Speicher unterschiedliche Längen aufweisen kann, eingelesen, so wird der Befehlszähler um die entsprechende Anzahl von Bytes inkrementiert, wodurch er automatisch auf die Adresse des nächsten zu bearbeitenden Befehles im Speicher deutet.

Die Bearbeitung von unterschiedlichen Befehlen weist viele ähnliche Ausführungsstufen auf, die jede für sich einen bestimmten Zeitraum beanspruchen. Ein einzelner Befehl kann deshalb nicht innerhalb eines einzigen Taktzyklus vollständig ausgeführt werden. Um die Verarbeitungsrate zu erhöhen, wird daher die Bearbeitung eines Befehles in elementare Aufgaben (z.B. Berechnen der Speicheradresse, Speicherzugriff, Dekodieren des Befehlscodes, Ausführung des Befehles, Zurückschreiben des Ergebnisses) aufgeteilt. Jede dieser Aufgaben wird dann in einer anderen Stufe einer sog. Befehls-Pipeline ausgeführt, wobei dies idealerweise in einem einzigen Taktzyklus erfolgt. Zu einem gegebenen Zeitpunkt befinden sich dann mehrere Befehle in einem jeweils unterschiedlich fortgeschrittenen Zustand der Befehls-Pipeline. Damit wird zwar nicht jeder Befehl in nur einem Taktzyklus vollständig ausgeführt, aber je Taktzyklus wird idealerweise die Bearbeitung eines Befehles abgeschlossen.

Befehle, die bereits dekodiert worden sind, werden bis zum Zeitpunkt ihrer Weiterleitung an die Ausführungseinheit des Prozessors in einem Instruktions-FIFO zwischengespeichert. Dieses Instruktions-FIFO stellt ein Registerfile dar, von dem zuerst abgelegte Befehle auch zuerst weitergeleitet werden. Zur Verwaltung dieses Registerfiles bezeichnen zwei Zeiger, ein Auslesepointer und ein Schreibpointer diejenigen Register des Instruktions-FIFOs, deren Befehle als nächste weitergeleitet werden bzw. die als nächstes beschrieben werden. Beide Pointer zirkulieren während des Programmablaufes über das Registerfile, wobei der Schreibpointer dem Auslesepointer hinterherlaufend auf Register zeigt, deren Befehle bereits ausgeführt worden sind. Auf diese Weise nutzt dann ein Prozessor in idealer Weise den Datenbus. Wird nämlich gerade ein Befehl ausgeführt, der keinen unmittelbaren Speicherzugriff erfordert, beispielsweise eine Addition von zwei Registern, werden diejenigen Register des Instruktions-FIFOs, die bereits ausgeführte Befehle enthalten, automatisch mit neuen Befehlen aus dem Speicher aufgefüllt. Dies erfolgt, ohne daß die Bearbeitung des gerade aktiven Befehles behindert wird, wobei natürlich ein Speicherzugriff durch den aktiven Befehl Vorrang vor dem Auffüllen des Instruktions-FIFOs hat. Auf diese Weise steht sofort nach der Abarbeitung eines Befehles durch die Ausführungseinheit ein neuer, bereits dekodierter Befehl aus dem Instruktions-FIFO zur Verfügung und muß nicht zuerst aus dem Speicher ausgelesen werden. Dieses Verfahren hat somit einen gleichmäßigen Befehlsstrom vom Speicher zum Prozessor zur Folge.

Durch bedingte oder unbedingte Sprünge oder Verzweigungen kann dieser gleichmäßige Befehlsstrom allerdings unterbrochen werden. Diese Sprünge verändern den Inhalt des oben erwähnten Befehlszählers wobei als Folge davon das Auslesen der Befehlscodes an einer anderen Stelle im Speicher fortgesetzt werden muß. Das Berechnen der Sprungfolgeadresse sowie der Speicherzugriff auf den neuen Befehl und das Dekodieren benötigt allerdings Zeit, so daß der Sprungfolgebefehl nicht sofort an die Befehlseinheit weitergeleitet werden kann. Allerdings wird ein Sprungbefehl schon während des Ablegens in das Instruktions-FIFO erkannt. Befinden sich daher in den Registern des Instruktions-FIFOs weitere Befehle, die noch vor dem Sprungbefehl ausgeführt werden müssen, kann diese Zeit genützt werden, den Sprungfolgebefehl aus dem Speicher auszulesen. Durch die Verwendung des Instruktions-FIFOs kann somit ein durch Sprungbefehle hervorgerufener Zeitverlust versteckt werden.

Kurze Programmschleifen, die nur aus einigen wenigen Operationen sowie einem Rücksprungbefehl bestehen, können allerdings die Effektivität des Instruktions-FIFOs beeinträchtigen. Da für den Speicherzugriff auf den Sprungfolgebefehl eine relativ große Zeit benötigt wird, wird normalerweise währenddessen mehr als ein Befehl von dem Instruktions-FIFO an die Ausführungseinheit weitergeleitet. Die Anzahl der sich im Instruktions-FIFO befindenden bereits dekodierten Befehle nimmt somit durch den Sprungbefehl ab. Im Extremfall, wenn im Programmablauf innerhalb kurzer Zeit viele Sprungbefehle erscheinen, nimmt die Anzahl der dekodierten Befehle nach und nach ab, bis das Instruktions-FIFO vollständig leer ist wodurch der kontinuierliche Befehlsstrom unterbrochen wird.

Der oben beschriebene Einfluß von Sprungbefehlen auf die Effektivität des Instruktions-FIFOs, der durch den Speicherzugriff auf die neuen Befehlscodes hervorgerufen wird, kann durch den Einsatz eines Cache-Speichers deutlich reduziert werden. Dennoch wird auch für einen Zugriff auf einen Cache-Speicher wesentlich mehr Zeit benötigt, als für den Zugriff auf einen bereits im Instruktions-FIFO vorliegenden Befehl, da ja außerdem auch der Zeitaufwand für das Dekodieren hinzukommt. Des weiteren ist der Einsatz von Cache-Speichern mit einer deutlichen Erhöhung der Kosten und einem erhöhten Platzaufwand verbunden.

Das Dokument US-A-4 626 988 beschreibt das Auslesen von Befehlen aus einem Befehlsspeicher in ein Befehlsregister. Befehle einer Programm schleife werden in einem Instruction-Array zwischengespeichert und während eines Schleifenmodus aus diesem Instruction-Array ausgelesen.

Der Erfindung liegt die Aufgabe zugrunde, ein Verfahren zum Auslesen von Befehlscodes und Weiterleiten der entsprechenden Befehle an die Befehlseinheit anzugeben, bei dem der oben beschriebene Zeitverlust, der durch kurze Programmschleifen hervorgerufen wird, mit Hilfe geeigneter Maßnahmen reduziert wird.

Diese Aufgabe wird durch ein Verfahren, welches die Merkmale des Anspruches 1 aufweist, gelöst. Es zeichnet sich insbesondere dadurch aus, das die Befehle von Programmschleifen, welche die Speicherkapazität des Instruktions-FIFOs nicht überschreiten, vollständig in dem Instruktions-FIFO zwischengespeichert werden. Während eines sog. Schleifen-Modus, laufen solche Programmschleifen dann nur noch aus dem Instruktions-FIFO selbst ab und die Befehle müssen nicht wiederholt neu aus dem Speicher nachgeladen werden. Dieser Schleifen-Modus wird dann so lange aufrechterhalten, bis der Sprungbefehl am Ende der Programmschleife schließlich auf einen anderen Befehl als denjenigen am Beginn der Schleife verweist.

Durch die Merkmale der weiteren Ansprüche wird das Verfahren weitergebildet. Insbesondere kann das Verfahren einen Schleifen-Such-Modus enthalten, mit Hilfe dessen solche Programmschleifen automatisch erkannt und in das Instruktions-FIFO geladen werden. Eine spezielle Markierung von kurzen Programmschleifen - beispielsweise durch einen Markierungscode innerhalb des Programmcodes - ist somit nicht notwendig. Dabei ist das Verfahren zum Erfassen der Schleifen so ausgebildet, daß es keine Taktzyklen des Prozessors beansprucht und somit von außen nicht erkennbar ist.

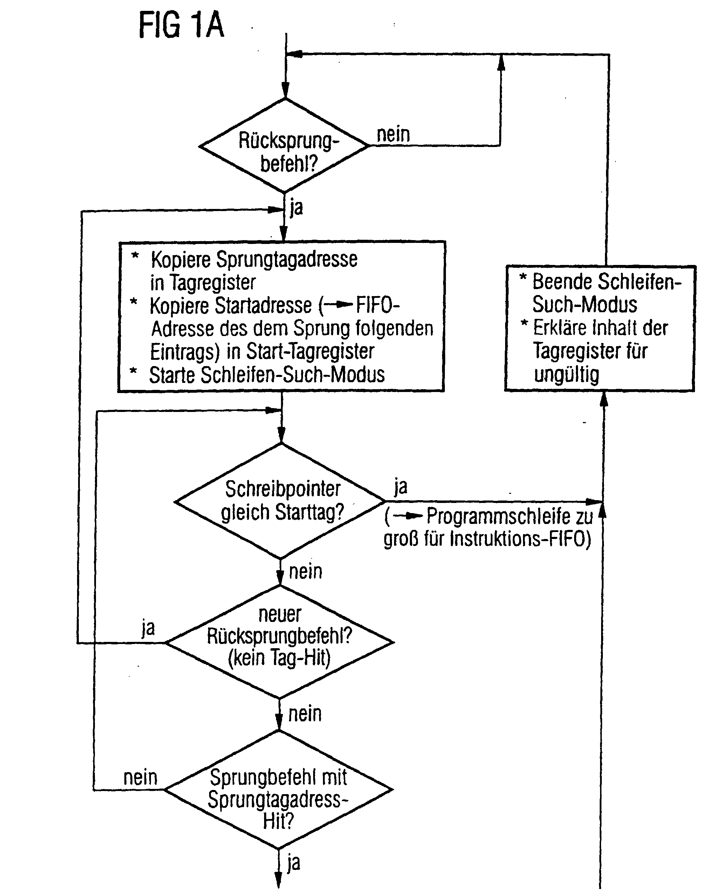

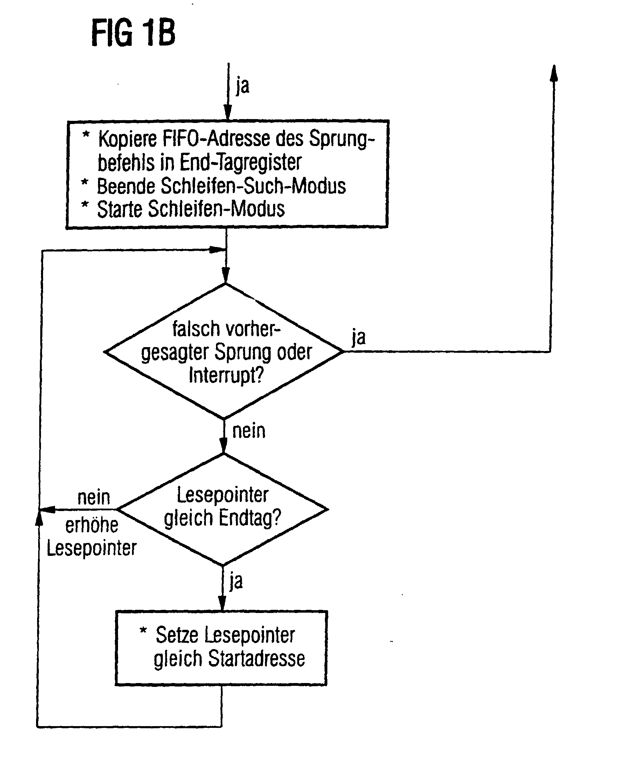

Im folgenden wird die Erfindung anhand der beiliegenden Figur 1 näher erläutert. Die beiden Figuren stellen das Ablaufschema einer erfindungsgemäßen Zusatzlogik dar. Diese Zusatzlogik weist einen Schleifen-Such-Modus zum Erfassen und Zwischenspeichern kurzer Programmschleifen sowie einen Schleifen-Modus zum wiederholten Weiterleiten dieser Schleifen aus dem Instruktions-FIFO zur Ausführungseinheit des Prozessors auf. Zum Zwischenspeichern von Adressen werden ein Tagregister, ein Start-Tagregister sowie ein End-Tagregister verwendet.

Im ersten Schritt erfolgt während des Nachladens von Befehlen in das Instruktions-FIFO zum Erfassen einer vermeintlich kurzen Programmschleife eine Abfrage, ob ein genommener oder als genommen vorhergesagter Rücksprungbefehl vorliegt. Ist dies nicht der Fall, wird diese Abfrage solange wiederholt, bis schließlich im Programmablauf ein bedingter oder ein unbedingter Rücksprung auftritt. Dabei ist es von Vorteil, nur solche Rücksprunge zu detektieren, die die prinzipielle Möglichkeit haben eine Schleife zu umfassen, die vollständig in dem Instruktions-FIFO abgelegt werden könnte. Die Auswahl kann beispielsweise danach erfolgen, ob der Sprungbefehl auf eine Adresse in einem zu seinem Befehlscode nahe gelegenen Bereich des Speichers deutet.

In diesem Fall wird ein Wiedererkennungsmerkmal des Sprungbefehls (im Folgenden Sprungtagadresse genannt), wie z.B. die Adresse des linearen Sprungnachfolgebefehls, die Adresse des Sprungbefehls oder die Speicheradresse des linearen Sprungvorgängerbefehls, in das Tagregister kopiert. Weiterhin wird die Adresse desjenigen Registers des Instruktions-FIFOs, in dem der Befehl mit der Adresse des Sprungzieles abgelegt wird, in dem Start-Tagregister gespeichert, da dieses Register den Anfang der möglichen Programmschleife im Instruktions-FIFO darstellt. Anschließend wird der Schleifen-Such-Modus eingeleitet.

Dabei wird das Instruktions-FIFO wie zu Anfang beschrieben mit weiteren Befehlen aufgefüllt, d.h. der Schreibpointer zirkuliert über die einzelnen Register des FIFOs, wobei bei jedem Laden eines Registers mit einem neuen Befehl eine Reihe von Abfragen durchgeführt wird.

In der ersten dieser Reihe von Abfragen wird überprüft, ob der Schreibpointer auf den Anfang der eventuellen Schleife deutet, ob also das neu zu beschreibende Register des Instruktions-FIFOs die in dem Start-Tagregister angegebene Adresse besitzt. Stimmen beide Adressen überein, bedeutet dies, daß die vermeintliche Schleife die Kapazität des Instruktions-FIFOs überschreitet. Der Schleifen-Such-Modus wird dementsprechend beendet, der Inhalt der drei Tagregister (Start-Tagregister, End-Tagregister und Tagregister) wird für ungültig erklärt und die Suche nach einer Schleife beginnt von neuem.

Stimmen Schreibpointer und Start-Tagregister nicht überein, wird als nächstes überprüft, ob ein Rücksprungbefehl vorliegt, dessen Sprungfolgeadresse nicht mit der in dem Tagregister abgelegten ursprünglichen Sprungfolgeadresse übereinstimmt. Ist dies der Fall, befindet sich das Programm in einer vermeintlichen neuen Schleife oder in einer untergeordneten Schleife. Der Schleifen-Such-Modus wird dementsprechend neu eingeleitet, wobei die neuen Werte in das Tagregister bzw. das Start-Tagregister geschrieben werden.

War das Ergebnis der Abfrage negativ, wird überprüft, ob ein Tag-Hit vorliegt, d.h. ob ein kurzer Rücksprungbefehl vorliegt, der auf die in dem Tagregister abgelegte Speicheradresse verweist. Ist auch dies nicht der Fall, wird von neuem ein Befehl aus dem Speicher in das Instruktions-FIFO geholt und die drei Abfragen werden wiederholt.

Liegt andererseits ein Tag-Hit vor, bedeutet dies, daß eine Programmschleife erkannt worden ist, die vollständig in dem Instruktions-FIFO gespeichert wurde. Die Adresse des Endes dieser Schleife, also desjenigen Registers des FIFOs, in dem der Sprungbefehl abgelegt wurde, wird in dem End-Tagregister gespeichert und die Logik wechselt von dem Schleifen-Such-Modus über in den Schleifen-Modus.

Dieser Schleifen-Modus ist **dadurch gekennzeichnet**, das ein weiteres Nachladen von Befehlen aus dem Speicher gestoppt wird und nur noch die sich in diesem Augenblick in dem Instruktions-FIFO befindenden Befehle an die Ausführungseinheit weitergegeben werden können.

Wiederum werden bei der Weitergabe eines jeden Befehles einige Abfragen durchgeführt.

Die erste Abfrage überprüft, ob ein Interrupt vorliegt oder ob das Ziel eines Sprungbefehls falsch vorhergesagt war. In diesen Fällen wird der Schleifen-Modus beendet, der Inhalt der drei Tagregister für ungültig erklärt und die Logik beginnt wieder am Anfang mit der Suche nach einer neuen Schleife.

War die Abfrage negativ, wird als nächstes überprüft, ob der Wert des in das Instruktions-FIFO weisenden Lesepointers mit dem Inhalt des End-Tagregisters übereinstimmt. Stimmen die beiden Werte nicht überein, wird der Befehl weitergeleitet und der Inhalt des Lesepointers erhöht.

War des Ergebnis der letzten Abfrage positiv, bedeutet dies, daß das Ende der Programmschleife erreicht wurde. Der Inhalt des Start-Tagregisters wird in diesem Fall in den Lesepointer kopiert und das Programm springt zurück zum Anfang der Schleife. Die Schleife wird also so lange wiederholt ausgeführt, bis entweder ein Interrupt auftritt oder der Sprungbefehl nicht mehr auf den Anfang der Programmschleife verweist.

Diese angegebene Logik zeichnet sich insbesondere dadurch aus, daß sie selbst nur geringfügig in die Steuerung des Instruktions-FIFOs eingreift. Sie ist somit technisch relativ einfach zu realisieren und läßt aufgrund ihrer geringen Tiefe sehr hohe Frequenzen zu. Die Vorteile des Schleifen-Modus bestehen darin, daß die Befehle einer Schleife nicht ständig neu nachgeladen und dekodiert werden müssen. Da ein Zugriff auf die in dem Instruktions-FIFO abgelegten Befehle extrem schnell erfolgen kann, ist der Zeitgewinn insbesondere bei kurzen Programmschleifen sehr hoch und die Arbeitsgeschwindigkeit des gesamten Programmes steigt deutlich an.

Ein weiterer Vorteil ist darin zu sehen, daß der Ablauf dieser Logik niemals zu einer Verschlechterung der Systemleistung führt, von außen also nicht erkennbar ist. Selbst ein mißglückter Schleifen-Such-Modus, beeinflußt den Programmablauf nicht, da ja die Befehle währenddessen in üblicher Weise vom Speicher in das Instruktions-FIFO geladen werden. Weiterhin erfaßt der Schleifen-Such-Modus jede Programmschleife mit einem Rücksprungbefehl, die vollständig in dem Instruktions-FIFO abgelegt werden kann. Eine zusätzliche Kennzeichnung solcher Schleifen oder gar neue Markierungsoder Steuerbefehle des Prozessors sind nicht notwendig.

## Patentansprüche

1. Verfahren zum Auslesen von Befehlsdaten aus einem Codespeicher in ein Instruktions-FIFO, Dekodieren der Befehlsdaten zum Gewinnen der Befehle und Weiterleiten der Befehle an eine Befehlseinheit, wobei das Auslesen der Befehlsdaten unter Verwendung von Prefetches erfolgt, und wobei das Instruktions-FIFO derjenige Speicher ist, in welchem die mittels Prefetches geholten Befehlsdaten bis zur Ausführung derselben zwischengespeichert werden,
**dadurch gekennzeichnet,**
**daß** die Befehle einer Programmschleife, die mit einem Sprungbefehl endet und die die Speicherkapazität des Instruktions-FIFOs nicht überschreitet, während eines Schleifen-Modus innerhalb des Instruktions-FIFOs vollständig gespeichert werden und die Befehle dieser Programmschleife zirkular aus dem Instruktions-FIFO an die Befehlseinheit weitergeleitet werden, wobei der Schleifen-Modus beendet wird, wenn der Sprungbefehl auf eine andere Adresse als diejenige des ersten Befehles der Programmschleife verweist.

2. Verfahren nach Anspruch 1,
**dadurch gekennzeichnet,**
**daß** beim. Auf treten eines Sprungbefehles, ein Schleifen-Such-Modus gestartet wird, wenn zu diesem Zeitpunkt nicht der Schleifen-Modus aktiviert ist, wobei ein Wiedererkennungsmerkmal des Sprungbefehles in einem Tagregister und die Adresse des nächstfolgenden Befehles innerhalb des Instruktions-FIFOs in einem Start-Tagregister gespeichert werden.

3. Verfahren nach Anspruch 2,
**dadurch gekennzeichnet,**
**daß** das Wiedererkennungsmerkmal des Sprungbefehles entweder die Speicheradresse des linearen Sprungvorgängerbefehls, des Sprungbefehls oder des linearen Sprungfolgebefehls ist.

4. verfahren nach Anspruch 2 oder 3,
**dadurch gekennzeichnet,**
**daß** der Schleifen-Such-Modus beendet wird, wenn die in dem Start-Tagregister angegebene Adresse innerhalb des Instruktions-FIFOs wieder neu beschrieben wird.

5. Verfahren nach einem der Ansprüche 2 bis 4,
**dadurch gekennzeichnet,**
**daß** beim Auftreten eines weiteren Sprungbefehles im aktivierten Schleifen-Such-Modus, dieser Schleifen-Such-Modus neu gestartet wird, falls die Sprungtagadresse des aktuellen Sprungbefehles nicht mit der vorher gespeicherten Sprungtagadresse übereinstimmt, wobei die neue Sprungtagadresse in dem Tagregister und die neue Adresse innerhalb des Instruktions-FIFOs des nächstfolgenden Befehles in dem Start-Tagregister gespeichert werden.

6. Verfahren nach einem der Ansprüche 2 bis 5,
**dadurch gekennzeichnet,**
**daß** der Schleifen-Such-Modus beendet wird und der Schleifen-Modus gestartet wird, falls ein Rücksprungbefehl auftritt, dessen Sprungtagadresse mit der in dem Tagregister gespeicherten Sprungtagadresse übereinstimmt, wobei die Adresse des Sprungfolgebefehls innerhalb des Instruktions-FIFOs in einem End-Tagregister gespeichert wird.

7. Verfahren nach einem der vorherigen Ansprüche,
**dadurch gekennzeichnet,**
**daß** der Schleifen-Modus zusätzlich dadurch beendet wird, daß ein Interrupt auftritt.

8. Verfahren nach einem der vorherigen Ansprüche,
**dadurch gekennzeichnet,**
**daß** während des Schleifen-Modus keine weiteren Daten in das Instruktions-FIFO eingelesen werden.

9. Vorrichtung zur Ausführung eines Verfahrens nach einem der Ansprüche 1 bis 8, mit Mitteln zum Auslesen von Befehlsdaten aus einem Codespeicher in ein Instruktions-FIFO, Dekodieren der Befehlsdaten zum Gewinnen der Befehle und Weiterleiten der Befehle an eine Befehlseinheit, wobei das Auslesen der Befehlsdaten unter Verwendung von Prefetches erfolgt, und wobei das Instruktions-FIFO derjenige Speicher ist, in welchem die mittels Prefetches geholten Befehlsdaten bis zur Ausführung derselben zwischengespeichert werden,
**dadurch gekennzeichnet,**
**daß** Mittel zum Erkennen einer geeigneten Programmschleife, die mit einem Sprungbefehl endet und die die Speicherkapazität des Instruktions-FIFOs nicht überschreitet, vorgesehen sind, sowie Mittel zum Speichern der Befehle dieser Programmschleife in dem Instruktions-FIFO für die Dauer eines Schleifen-Modus, Mittel zum zirkulierenden Auslesen der Befehle der Programmschleife aus dem Instruktions-FIFO und Weiterleiten an die Befehlseinheit und Mittel zum Beenden des Schleifen-Modus in Abhängigkeit von Inhalt des Sprungbefehles der Programmschleife.

10. Vorrichtung nach Anspruch 9,
**dadurch gekennzeichnet,**
**daß** Mittel zum Starten eines Schleifen-Such-Modus in Abhängigkeit vom Auftreten eines Sprungbefehles und von dem aktuellen Modus des Instruktions-FIFOs vorgesehen sind, sowie ein Tagregister zum Speichern der Sprungtagadresse im Schleifen-Modus und ein Start-Tagregister zum Speichern der Adresse des nächstfolgenden Befehles innerhalb des Instruktions-FIFOs.

## Claims

1. Method for reading instruction data from a code memory into an instruction FIFO, decoding the instruction data to obtain the instructions and forwarding the instructions to an instruction unit, where the instruction data are read using prefetches, and where the instruction FIFO is that memory which buffer-stores the instruction data fetched using prefetches until they are executed,
**characterized**
**in that** the instructions of a program loop which ends with a jump instruction and does not exceed the storage capacity of the instruction FIFO are stored in full during a loop mode within the instruction FIFO, and the instructions of this program loop are forwarded in circular fashion from the instruction FIFO to the instruction unit, the loop mode being terminated if the jump instruction refers to an address other than that of the first instruction of the program loop.

2. Method according to Claim 1,
**characterized**
**in that**, upon the occurrence of a jump instruction, a loop search mode is started if the loop mode is not activated at this instant, a recognition feature for the jump instruction being stored in a tag register and the address of the next instruction within the instruction FIFO being stored in a start tag register.

3. Method according to Claim 2,
**characterized**
**in that** the recognition feature of the jump instruction is alternatively the memory address of the previous linear jump instruction, of the jump instruction or of the subsequent linear jump instruction.

4. Method according to Claim 2 or 3,
**characterized**
**in that** the loop search mode is terminated if the address indicated in the start tag register has new information written to it again within the instruction FIFO.

5. Method according to one of Claims 2 to 4,
**characterized**
**in that**, upon the occurrence of a further jump instruction in the activated loop search mode, this loop search mode is restarted if the jump tag address of the current jump instruction does not match the previously stored jump tag address, the new jump tag address being stored in the tag register and the new address within the instruction FIFO of the next instruction being stored in the start tag register.

6. Method according to one of Claims 2 to 5,
**characterized**
**in that** the loop search mode is terminated and the loop mode is started if a return instruction arises whose jump tag address matches the jump tag address stored in the tag register, the address of the subsequent jump instruction within the instruction FIFO being stored in an end tag register.

7. Method according to one of the preceding claims,
**characterized**
**in that** the loop mode is additionally terminated by virtue of an interrupt occurring.

8. Method according to one of the preceding claims,
**characterized**
**in that** no further data are read into the instruction FIFO during the loop mode.

9. Apparatus for carrying out a method according to one of Claims 1 to 8, having means for reading instruction data from a code memory into an instruction FIFO, decoding the instruction data to obtain the instructions and forwarding the instructions to an instruction unit, where the instruction data are read using prefetches, and where the instruction FIFO is that memory which buffer-stores the instruction data fetched using prefetches until they are executed,
**characterized**
**in that** means are provided for detecting a suitable program loop which ends with a jump instruction and does not exceed the storage capacity of the instruction FIFO, and also means for storing the instructions of this program loop in the instruction FIFO for the duration of a loop mode, means for reading the instructions for the program loop in circulating fashion from the instruction FIFO and forwarding them to the instruction unit, and means for terminating the loop mode on the basis of the content of the jump instruction of the program loop.

10. Apparatus according to Claim 9,
**characterized**
**in that** means are provided for starting a loop search mode on the basis of the occurrence of a jump instruction and on the basis of the current mode of the instruction FIFO, and also a tag register for storing the jump tag address in the loop mode and a start tag register for storing the address of the next instruction within the instruction FIFO.

## Revendications

1. Procédé pour charger des données d'instruction depuis une mémoire de code dans une FIFO d'instructions, décoder les données d'instruction pour obtenir les instructions et transmettre les instructions à une unité d'instruction, le chargement des données d'instruction s'effectuant en utilisant des pré-chargements et la FIFO d'instructions étant la mémoire dans laquelle sont mémorisées temporairement les données d'instructions pré-chargées jusqu'à l'exécution de celles-ci, **caractérisé en ce que** les instructions d'une boucle du programme qui se termine par une instruction de saut et qui ne dépasse pas la capacité mémoire de la FIFO d'instructions sont entièrement mémorisées dans la FIFO d'instructions pendant un mode boucle et les instructions de cette boucle du programme sont transmises de manière circulaire de la FIFO d'instructions vers l'unité d'instruction lorsque l'instruction de saut pointe sur une adresse différente de celle de la première instruction de la boucle du programme.

2. Procédé selon la revendication 1, **caractérisé en ce qu'**en cas d'apparition d'une instruction de saut, un mode boucle est lancé si le mode boucle n'est pas activé à ce moment-là, une caractéristique de reconnaissance de l'instruction de saut étant enregistrée dans un registre de jour et l'adresse de l'instruction suivante dans un registre de jour de début à l'intérieur de la FIFO d'instructions.

3. Procédé selon la revendication 2, **caractérisé en ce que** la caractéristique de reconnaissance de l'instruction de saut est soit l'adresse mémoire de l'instruction linéairement antérieure au saut, de l'instruction de saut ou de l'instruction linéairement consécutive au saut.

4. Procédé selon la revendication 2 ou 3, **caractérisé en ce que** le mode de recherche de boucle est terminé lorsque l'adresse indiquée dans le registre de jour de début est de nouveau ré-écrit au sein de la FIFO d'instructions.

5. Procédé selon l'une des revendications 2 à 4, **caractérisé en ce qu'**en cas d'apparition d'une autre instruction de saut lorsque le mode de recherche de boucle est activé, ce mode de recherche de boucle est de nouveau démarré si l'adresse de jour de saut de l'instruction de saut courante ne coïncide pas avec l'adresse de jour de saut enregistrée précédemment, la nouvelle adresse de jour de saut étant enregistrée dans le registre de jour et la nouvelle adresse au sein de la FIFO d'instructions de l'instruction suivante dans le registre de jour de début.

6. Procédé selon l'une des revendications 2 à 5, **caractérisé en ce que** le mode de recherche de boucle est terminé et le mode boucle est lancé s'il apparaît une instruction de retour au programme principal dont l'adresse de jour de saut coïncide avec l'adresse de jour de saut enregistrée dans le registre de jour, l'adresse de l'instruction consécutive au saut étant enregistrée dans un registre de jour de fin à l'intérieur de la FIFO d'instructions.

7. Procédé selon l'une des revendications précédentes, **caractérisé en ce que** le mode boucle est en plus terminé par l'apparition d'une interruption.

8. Procédé selon l'une des revendications précédentes, **caractérisé en ce qu'**aucune donnée supplémentaire n'est lue dans la FIFO d'instructions pendant le mode boucle.

9. Dispositif pour exécuter un procédé selon l'une des revendications 1 à 8, comprenant des moyens pour charger des données d'instruction depuis une mémoire de code dans une FIFO d'instructions, décoder les données d'instruction pour obtenir les instructions et transmettre les instructions à une unité d'instruction, le chargement des données d'instruction s'effectuant en utilisant des pré-chargements et la FIFO d'instructions étant la mémoire dans laquelle sont mémorisées temporairement les données d'instructions pré-chargées jusqu'à l'exécution de celles-ci, **caractérisé en ce que** sont prévus des moyens de détection d'une boucle du programme appropriée qui se termine par une instruction de saut et qui ne dépasse pas la capacité mémoire de la FIFO d'instructions ainsi que des moyens pour mémoriser les instructions de cette boucle du programme dans la FIFO d'instructions pendant la durée d'un mode boucle, des moyens pour le chargement par circulation des instructions de la boucle du programme depuis la FIFO d'instructions et leur transmission vers l'unité d'instruction et des moyens pour terminer le mode boucle en fonction du contenu de l'instruction de saut de la boucle du programme.

10. Dispositif selon la revendication 9, **caractérisé en ce que** sont prévus des moyens pour lancer un mode boucle en fonction de l'apparition d'une instruction de saut et du mode courant de la FIFO d'instructions ainsi qu'un registre de jour pour enregistrer l'adresse de jour de saut en mode boucle et un registre de jour de début pour enregistrer l'adresse de l'instruction suivante au sein de la FIFO d'instructions.
